(19)

**Europäisches Patentamt**
**European Patent Office**
**Office européen des brevets**

(11)  **EP 1 632 346 B1**

(12)  **EUROPEAN PATENT SPECIFICATION**

(45) Date of publication and mention
of the grant of the patent:
**25.05.2011  Bulletin 2011/21**

(51) Int Cl.:
**B32B 27/30** (2006.01)   **C08J 7/04** (2006.01)

(21) Application number: **04729518.3**

(22) Date of filing: **26.04.2004**

(86) International application number:
**PCT/JP2004/005995**

(87) International publication number:
**WO 2004/096540 (11.11.2004 Gazette 2004/46)**

(54) **HEAT-SHRINKABLE LAYERED FILM AND PACKAGE MADE WITH THE SAME**

WÄRMESCHRUMPFBARE GESCHICHTETE FOLIE UND DAMIT HERGESTELLTE VERPACKUNG

FILM EN COUCHES THERMORETRACTABLE ET EMBALLAGE CONCU AU MOYEN DE CELUI-CI

(84) Designated Contracting States:
**AT BE BG CH CY CZ DE DK EE ES FI FR GB GR
HU IE IT LI LU MC NL PL PT RO SE SI SK TR**

(30) Priority: **25.04.2003  JP 2003123004**

(43) Date of publication of application:
**08.03.2006  Bulletin 2006/10**

(73) Proprietor: **Kureha Corporation
Tokyo 103-8552 (JP)**

(72) Inventors:
• **KASHIMURA, Masayuki,
Kureha Corporation
Tokyo 103-8552 (JP)**
• **OHIRA, Hiroshi,
Kureha Corporation
Adachi-Ku, Tokyo 121-0055 (JP)**

• **INABA, Yusaku,
Kureha Corporation
Tokyo 103-8552 (JP)**
• **TANAKA, Hideaki,
Kureha Corporation
Tokyo 103-8552 (JP)**

(74) Representative: **Jones, Helen M.M.
Gill Jennings & Every LLP
The Broadgate Tower
20 Primrose Street
London EC2A 2ES (GB)**

(56) References cited:
JP-A- 9 039 970      JP-A- 59 001 352
JP-A- 62 294 547     JP-A- 2000 000 931
JP-A- 2001 019 782   JP-A- 2001 310 425
JP-A- 2002 120 848

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a heat-shrinkable multi-layer film, and to a packaged product obtained by packaging an object with the film and subjecting the thus-packaged object to thermal shrinkage treatment.

BACKGROUND ART

In a conventional hermetic container requiring oxygen-barrier property, a container member and a cover member are formed of a material exhibiting oxygen-barrier property. In some cases, such a hermetic container *per se* is protected with a stretchable packaging film or a stretchable/shrinkable packaging film. In the case of packaging of an object without using a container member and a cover member, the object is packaged directly with a film exhibiting oxygen-barrier property and stretchability/shrinkability. Japanese Patent Application Laid-Open (kokai) No. 2001-341201 discloses, as a film exhibiting oxygen-barrier property and shrinkability, a barrier shrink film which is formed of an aliphatic polyamide and a xylylene-containing polyamide and exhibits specific percent shrinkage and oxygen permeability under specific conditions.

Such a film exhibiting shrinkability and gas-barrier property has conventionally been employed for packaging, and packaging films exhibiting various characteristics have been proposed.

DISCLOSURE OF THE INVENTION

An object of the present invention is to provide a heat-shrinkable multi-layer film comprising a layer formed of a poly(carboxylic acid) polymer; a layer formed of a polyvalent metal compound; and a heat-shrinkable support film.

The present inventors have conducted studies on a gas-barrier multi-layer film including a layer formed of a poly(carboxylic acid) polymer and a polyvalent metal compound (Japanese Patent Application No. 2002-121246), and have found that when the gas-barrier multi-layer film is formed on a heat-shrinkable base film, the thus-formed multi-layer film exhibits heat shrinkability without impairing gas-barrier property. The present invention has been accomplished on the basis of this finding.

Accordingly, the present invention provides a heat-shrinkable multi-layer film comprising a heat-shrinkable support film (base film) and, on at least one surface of the base film, at least one layer structure including a layer (a) formed of a poly(carboxylic acid) polymer (A) and a layer (b) formed of a polyvalent metal compound (B), the layers (a) and (b) being in contact with each other, and the multi-layer film exhibiting a percent thermal shrinkage of 5 to 90% as defined in claim 1. The present invention also provides a heat-shrinkable multi-layer film comprising a heat-shrinkable support film (base film) and, on at least one surface of the base film, at least one layer structure including a layer (a) formed of a poly(carboxylic acid) polymer (A), and a polyvalent-metal-compound-containing resin layer formed of a polyvalent metal compound (B) and a resin, the layer (a) and the resin layer being in contact with each other, wherein the multi-layer film exhibits a percent thermal shrinkage of 5 to 90%, and the base film exhibits a percent thermal shrinkage of 5 to 90% as defined in claim 1. The present disclosure also provides a packaged product obtained by packaging an object with the aforementioned heat-shrinkable multi-layer film. The present invention further provides a heat-shrinkable label comprising the aforementioned heat-shrinkable multi-layer film.

BEST MODE FOR CARRYING OUT THE INVENTION

A heat-shrinkable multi-layer film according to the present invention (hereinafter may be abbreviated as "the multi-layer film") includes a heat-shrinkable support film (base film) and, on at least one surface of the base film, at least one layer structure including a layer (a) formed of a poly(carboxylic acid) polymer (A) and a layer (b) formed of a polyvalent metal compound (B), the layers (a) and (b) being in contact with each other. Generally, shrinkage of the entirety of the heat-shrinkable multi-layer film is determined by the shrinkage of the heat-shrinkable support film (base film).

The poly(carboxylic acid) polymer (A) employed in the present invention may be an existing poly(carboxylic acid) polymer. The term "existing poly(carboxylic acid) polymer" refers a polymer containing in the molecule thereof two or more carboxyl groups. Specific examples of the existing poly(carboxylic acid) polymer include homopolymers or copolymers formed from an $\alpha,\beta$-monoethylenic unsaturated carboxylic acid; copolymers formed from an $\alpha,\beta$-monoethylenic unsaturated carboxylic acid and an ethylenic unsaturated monomer; and acidic polysaccharides containing in the molecule a carboxyl group, such as alginic acid and pectin. These poly(carboxylic acid) polymers (A) may be employed singly or in combination of two or more species. Typical examples of the $\alpha,\beta$-monoethylenic unsaturated carboxylic acid include acrylic acid, methacrylic acid, itaconic acid, maleic acid, fumaric acid, and crotonic acid.

Typical examples of the ethylenic unsaturated monomer capable of being copolymerized with such an $\alpha,\beta$-

monoethylenic unsaturated carboxylic acid include olefins such as ethylene and propylene; saturated carboxylic acid vinyl esters such as vinyl acetate; alkyl acrylates; alkyl methacrylates; alkyl itaconates; acrylonitrile; halogen-containing monomers such as vinyl chloride, vinylidene chloride, vinyl fluoride, and vinylidene fluoride; and aromatic vinyl monomers such as styrene. In the case where the poly(carboxylic acid) polymer (A) is a copolymer formed from an $\alpha,\beta$-monoethylenic unsaturated carboxylic acid and a saturated carboxylic acid vinyl ester (e.g., vinyl acetate), the copolymer may be subjected to saponification before use, to thereby convert saturated carboxylic acid vinyl ester moieties into vinyl alcohol.

In the case where the poly(carboxylic acid) polymer (A) is a copolymer formed from an $\alpha,\beta$-monoethylenic unsaturated carboxylic acid and an ethylenic unsaturated monomer, from the viewpoints of gas-barrier property, high-temperature water vapor resistance, and hot water resistance of the multi-layer film of the present invention, the compositional proportion of the $\alpha,\beta$-monoethylenic unsaturated carboxylic acid in the copolymer is preferably 60 mol% or more, more preferably 80 mol% or more, much more preferably 90 mol% or more, most preferably 100 mol% (i.e., the poly(carboxylic acid) polymer (A) is a polymer formed solely from the $\alpha,\beta$-monoethylenic unsaturated carboxylic acid).

In the case where the poly(carboxylic acid) polymer (A) is a polymer formed solely from the $\alpha,\beta$-monoethylenic unsaturated carboxylic acid, examples of the polymer include homopolymers or copolymers formed through polymerization of at least one polymerizable monomer selected from the group consisting of $\alpha,\beta$-monoethylenic unsaturated carboxylic acids described above as typical examples, and mixtures of such homopolymers or copolymers. Preferably, there are employed homopolymers or copolymers formed through polymerization of at least one polymerizable monomer selected from among acrylic acid, maleic acid, and methacrylic acid, and/or mixtures of such homopolymers or copolymers. More preferably, there are employed polyacrylic acid, polymethacrylic acid, polymaleic acid, and mixtures thereof. In the case where the poly(carboxylic acid) polymer (A) is a substance other than a polymer formed from an $\alpha,\beta$-monoethylenic unsaturated carboxylic acid monomer; for example, an acidic polysaccharide, alginic acid is preferably employed.

So long as properties such as a gas-barrier property and heat shrinkability of the multi-layer film are not impaired, the entirety or a portion of carboxyl groups contained in the molecule of the poly(carboxylic acid) polymer (A) may be formed into a metal salt by use of a compound of a monovalent metal (e.g., sodium or potassium), and the resultant poly(carboxylic acid) polymer may be employed singly or in combination with another poly(carboxylic acid) polymer. Alternatively, the poly(carboxylic acid) polymer (A) may be employed in combination with the aforementioned monovalent metal compound.

No particular limitation is imposed on the number average molecular weight of the poly(carboxylic acid) polymer (A), but, from the viewpoint of film formability, the number average molecular weight is preferably 2,000 to 1,000,000, more preferably 10,000 to 500,000, most preferably 30,000 to 300,000. When the number average molecular weight is excessively small, a coating film is difficult to form, whereas when the number average molecular weight is excessively large, coating is difficult to perform.

The polyvalent metal compound (B) employed in the present invention encompasses a polyvalent metal element having a valence of 2 or more, and a compound of such a polyvalent metal element. Specific examples of the polyvalent metal include alkaline earth metals such as beryllium, magnesium, and calcium; transition metals such as titanium, zirconium, chromium, manganese, iron, cobalt, nickel, copper, and zinc; and aluminum. Specific examples of the polyvalent metal compound include oxides, hydroxides, carbonates, organic acid salts, and inorganic acid salts of the aforementioned polyvalent metals; ammonium complexes of the polyvalent metals; secondary to quaternary amine complexes of the polyvalent metals; and carbonates and organic acid salts of such complexes. Examples of the organic acid salts include acetates, oxalates, citrates, lactates, phosphates, phosphites, hypophosphites, stearates, and monoethylenic unsaturated carboxylic acid salts. Examples of the inorganic acid salts include chlorides, sulfates, and nitrates. Other examples of the polyvalent metal compound include alkyl alkoxides of the aforementioned polyvalent metals.

These polyvalent metal compounds may be employed singly or in combination of two or more species. Of these polyvalent metal compounds, the polyvalent metal compound (B) employed in the present invention is preferably a divalent metal compound, from the viewpoints of gas-barrier property, high-temperature water vapor resistance, hot water resistance, and productivity of the multi-layer film of the present invention. More preferably, the polyvalent metal compound (B) is an oxide, hydroxide, or carbonate of an alkaline earth metal, cobalt, nickel, copper, or zinc; an ammonium complex of cobalt, nickel, copper, or zinc; or a carbonate of such a complex. Much more preferably, the polyvalent metal compound (B) is an oxide, hydroxide, or carbonate of magnesium, calcium, copper, or zinc; an ammonium complex of copper or zinc; or a carbonate of such a complex.

In the case where the polyvalent metal compound (B) to be employed is in the form of particles, preferably, the particle size is small, from the viewpoint of transparency of the multi-layer film. Furthermore, from the viewpoint that the below-described coating mixture for producing the multi-layer film of the present invention is more uniformly prepared, preferably, the polyvalent metal compound is in the form of particles having a small particle size. The average particle size of the polyvalent metal compound is preferably 5 $\mu$m or less, more preferably 1 $\mu$m or less, particularly preferably 0.1 $\mu$m or less, most preferably 0.05 $\mu$m or less.

When the average particle size of the polyvalent metal compound is excessively large, the resultant multi-layer film may encounter difficulty in exhibiting gas-barrier property. The polyvalent metal compound (B) is preferably employed in the form of a mixture with the below-described specific resin, from the viewpoints of coating performance of the compound, as well as adhesion between the compound and the surface of an object to be coated. Particularly in the case where the layer (b) formed of the polyvalent metal compound (B) is a polyvalent-metal-compound-containing resin layer, when the multi-layer film is subjected to thermal shrinkage treatment, gas-barrier property of the film is not deteriorated but rather improved, which is preferred. Preferred examples of the resin constituting the polyvalent-metal-compound-containing resin include resins employed for coating materials, such as alkyd resin, melamine resin, acrylic resin, nitrocellulose, urethane resin, polyester resin, polyether resin, phenolic resin, amino resin, fluorocarbon resin, and epoxy resin. Of these, polyester resin and polyether resin are preferred, from the viewpoints of coating performance, adaptability to shrinkage of the base film, and flexibility.

No particular limitation is imposed on the type of the support film employed in the present invention, so long as the film is a plastic film having the below-described properties. Specific examples of the material of such a plastic film include chlorine-containing polymers such as polyvinyl chloride and polyvinylidene chloride, and copolymers of monomers constituting such polymers; polystyrene polymers; polyester polymers such as polyethylene terephthalate and polyethylene naphthalate, and copolymers thereof; polyamide polymers and copolymers thereof, such as nylon 6, nylon 66, nylon 12, nylon 6/66 copolymers, and nylon 6/12 copolymers; vinyl-acetate-containing copolymers such as ethylene-vinyl acetate copolymers and ethylene-vinyl alcohol copolymers; and olefin polymers such as low-density polyethylene, linear low-density polyethylene, and polypropylene, and copolymers thereof. The support film may be a heat-shrinkable stretched sheet or film formed of such a plastic material.

The heat-shrinkable support film (base film) determines the heat shrinkability of the entirety of the heat-shrinkable multi-layer film of the present invention. The percent thermal shrinkage of the support film is preferably 5 to 70%, as measured in at least one direction. The present inventors have found that when the percent thermal shrinkage of the support film exceeds 90%, difficulty is encountered in producing the gas-barrier multi-layer film of the present invention while attaining a uniform film thickness, and difficulty is also encountered in maintaining and improving gas-barrier property of the multi-layer film after thermal shrinkage treatment. In order to bring the multi-layer film into close contact with an object to be packaged after thermal shrinkage treatment, and to maintain gas-barrier property of the film after packaging of the object, the percent thermal shrinkage of the support film is above the minimum defined in claim 1.

Gas-barrier property of the entirety of the multi-layer film is secured by means of the gas-barrier multi-layer structure including the layer (a) formed of a poly(carboxylic acid) polymer (A) and the layer (b) formed of a polyvalent metal compound (B). Percent thermal shrinkage of the multi-layer film of the present invention is 5 to 90%, more preferably 5 to 80%, most preferably 5 to 70%, as measured in at least one direction. When the percent thermal shrinkage as measured in at least one direction is 0 to 10%, the percent thermal shrinkage as measured in a direction perpendicular to said one direction is preferably 20% or more, more preferably 30% or more, most preferably 40% or more. The upper limit of the percent thermal shrinkage as measured in the perpendicular direction is about 90% or less.

Thermal shrinkage treatment is preferably carried out in, for example, hot water, vapor, steam, or hot air. As used herein, the term "percent thermal shrinkage" refers to, unless otherwise specified, the percent thermal shrinkage of the multi-layer film or the support film measured after the film is immersed in hot water at 90°C for 30 seconds.

Next will be described the method for producing the multi-layer film of the present invention. A coating method is employed for forming, on the heat-shrinkable support film, the layer (a) containing a poly(carboxylic acid) polymer (A) and the layer (b) containing a polyvalent metal compound (B).

As used herein, the term "coating method" is a method in which a coating liquid containing a poly(carboxylic acid) polymer (A) and a solvent, or a coating liquid containing a polyvalent metal compound (B) and a solvent is applied onto the support film, and then the solvent is removed through evaporation or a similar technique, to thereby form the layer (a) or the layer (b) on the support film. The coating method is specifically performed by use of, for example, a coater or a printing apparatus. Examples of the coater, printing apparatus, and coating technique which may be employed include coating techniques such as a direct gravure technique, a reverse gravure technique, a kiss reverse gravure technique, and an offset gravure technique; and coaters employed in these techniques, such as a gravure coater, a reverse roll coater, a micro-gravure coater, an air knife coater, a dip coater, a bar coater, a comma coater, and a die coater. The coating method encompasses a method in which a coating liquid containing a monomer of the poly(carboxylic acid) polymer (A) is applied onto the support film, and the monomer is polymerized through irradiation with UV rays or electron beams, to thereby form the layer (a); and a method in which a monomer of the polymer (A) is deposited onto the support film while the monomer is polymerized through irradiation with, for example, electron beams, to thereby form the layer (a). Also, the coating method encompasses a method in which the polyvalent metal compound (B) is deposited onto the support film through vapor deposition, sputtering, ion plating, or a similar technique, to thereby form the layer (b) containing the compound (B).

After a coating liquid containing a poly(carboxylic acid) polymer (A) and a solvent, or a coating liquid containing a polyvalent metal compound (B) and a solvent is applied onto the support film, the solvent is evaporated for drying. No particular limitation is imposed on the method for evaporating the solvent. Examples of the evaporation method which may be employed include a method in which the solvent is naturally evaporated, a method in which the solvent is evaporated in an oven whose temperature is regulated at a predetermined level, and a method in which the solvent is evaporated in a drying apparatus equipped with the aforementioned coater, such as an arch dryer, a floating dryer, a drum dryer, or an infrared dryer. The evaporation conditions may be arbitrarily determined, so long as the support film, the layer (a) formed of a poly(carboxylic acid) polymer (A), or the layer (b) formed of a polyvalent metal compound (B) is not damaged by heat.

No particular limitation is imposed on the order for applying, onto the support film, a coating liquid containing a poly(carboxylic acid) polymer (A) and a solvent, and a coating liquid containing a polyvalent metal compound (B) and a solvent, so long as at least one layer structure including the layer (a) and the layer (b) which are in contact with each other is formed. Each of the layers (a) and (b) may be provided in a plurality of numbers, and in this case, layers (a) and layers (b) may be laminated alternately, or may form a sandwich structure. No particular limitation is imposed on the total of the thicknesses of the layer(s) (a) and the layer(s) (b) formed on the support film, but the total thickness is preferably 0.002 μm to 1 mm, more preferably 0.02 μm to 100 μm, much more preferably 0.1 μm to 20 μm.

The thickness of a single layer (a) is preferably 0.001 μm to 200 μm, more preferably 0.01 μm to 50 μm, much more preferably 0.05 μm to 10 μm. The thickness of a single layer (b) is preferably 0.001 μm to 800 μm, more preferably 0.01 μm to 50 μm, much more preferably 0.05 μm to 10 μm.

The ratio of the total thickness of a single layer (a) and a single layer (b) which are in contact with each other (hereinafter a combination of the layers (a) and (b) may be called a "gas-barrier layer") to the thickness of the support film; i.e., (gas-barrier layer thickness/support film thickness), is preferably 0.001 to 0.5, more preferably 0.002 to 0.3, most preferably 0.004 to 0.2. When the thickness ratio is less than 0.001, gas-barrier property of the resultant multi-layer film may be deteriorated, whereas when the thickness ratio exceeds 0.5, cracking may occur in the gas-barrier layer or wrinkles may be formed on the multi-layer film during thermal shrinkage of the film, leading to deterioration of the transparency of the film.

The coating liquid containing a poly(carboxylic acid) polymer (A) and a solvent can be prepared by dissolving or dispersing a polymer (A) in the solvent. No particular limitation is imposed on the solvent to be employed, so long as it can uniformly dissolve or disperse the poly(carboxylic acid) polymer (A). Specific examples of the solvent include water, acetone, methyl alcohol, ethyl alcohol, isopropyl alcohol, dimethyl sulfoxide, dimethylformamide, and dimethylacetamide. The poly(carboxylic acid) polymer (A) may be readily reacted with the polyvalent metal compound (B) in an aqueous solution, resulting in formation of non-uniform precipitates. Therefore, in the case where the coating liquid containing a poly(carboxylic acid) polymer (A) and a solvent is applied onto the layer (b) formed of a polyvalent metal compound (B), when the solvent is water, the poly(carboxylic acid) polymer (A) may be reacted with the polyvalent metal compound during application of the coating liquid, resulting in formation of non-uniform precipitates. Therefore, the solvent employed in the coating liquid is preferably a non-aqueous solvent, or a mixture of a non-aqueous solvent and water.

The coating liquid may optionally contain, in addition to the poly(carboxylic acid) polymer (A) and the solvent, an additive such as a polymer other than the polymer (A) (e.g., polyvinyl alcohol), a softening agent (e.g., glycerin), a stabilizer, an anti-blocking agent, a tackifier, or an inorganic layered compound (e.g., montmorillonite), so long as such an additive does not impede gas-barrier property of the multi-layer film of the present invention, which is a final product. The total amount of such additives to be added is preferably 5 wt.% or less, more preferably 3 wt.% or less, most preferably 1 wt.% or less, on the basis of the amount of the poly(carboxylic acid) polymer (A) contained in the coating liquid.

Similar to the case described above, the coating liquid may contain a monovalent metal compound, so long as the compound does not impede gas-barrier property of the multi-layer film of the present invention, which is a final product. The amount of the poly(carboxylic acid) polymer (A) contained in the coating liquid is preferably 0.1 to 50 wt. %, more preferably 0.5 to 30 wt.%, most preferably 1 to 10 wt.%. When the poly(carboxylic acid) polymer (A) content is low, a coating film is difficult to form, whereas when the polymer content is excessively high, coating is difficult to perform.

The coating liquid containing the polyvalent metal compound (B) and a solvent can be prepared by dissolving or dispersing the compound (B) in the solvent. No particular limitation is imposed on the solvent to be employed, so long as it can uniformly dissolve or disperse the polyvalent metal compound (B). Specific examples of the solvent which may be employed include water, methyl alcohol, ethyl alcohol, isopropyl alcohol, n-propyl alcohol, n-butyl alcohol, n-pentyl alcohol, dimethyl sulfoxide, dimethylformamide, dimethylacetamide, toluene, hexane, heptane, cyclohexane, acetone, methyl ethyl ketone, diethyl ether, dioxane, tetrahydrofuran, ethyl acetate, and butyl acetate. As described above, the poly(carboxylic acid) polymer (A) may be readily reacted with the polyvalent metal compound in an aqueous solution, resulting in formation of non-uniform precipitates. Therefore, in the case where the coating liquid containing the polyvalent metal compound (B) and a solvent is applied onto the layer (a) formed of a poly(carboxylic acid) polymer (A), when the solvent is water, the poly(carboxylic acid) polymer (A) may be reacted with the polyvalent metal compound during application of the coating liquid, resulting in formation of non-uniform precipitates. Therefore, the solvent employed in the coating liquid is preferably a non-aqueous solvent, or a mixture of a non-aqueous solvent and water.

The coating liquid containing the polyvalent metal compound (B) and a solvent may optionally contain, in addition the compound (B) and the solvent, an additive such as a resin, a dispersant, a surfactant, a softening agent, a stabilizer, a film-forming agent, an anti-blocking agent, or a tackifier. Particularly, in order to improve the dispersibility and coating performance of the polyvalent metal compound, preferably, a resin which is soluble in the solvent employed is added to the coating liquid.

In the coating liquid, the ratio by weight of the polyvalent metal compound (B) to the resin (R); i.e., (B) / (R), is preferably 0.1 to 9, more preferably 0.1 to 5, most preferably 0.2 to 5. When the ratio (B)/(R) is high, adhesion of the polyvalent metal compound (B) to a coating surface tends to be lowered. No particular limitation is imposed on the total amount of the polyvalent metal compound, the resin, and an additive (other than the resin) in the coating liquid, but, from the viewpoint of coating performance, the total amount is preferably 0.1 wt.% to 50 wt.%, more preferably 1 wt.% to 50 wt.%. A preferred mode of the layer (b) formed of the polyvalent metal compound (B) is a polyvalent-metal-compound-containing resin layer formed through application of the coating liquid containing the aforementioned polyvalent-metal-compound-containing resin.

When the coating liquid containing a poly(carboxylic acid) polymer (A) and a solvent, or the coating liquid containing a polyvalent metal compound (B) and a solvent is applied onto the support film, an adhesive may be applied in advance onto the surface of the support film, in order to enhance adhesion between the support film and the layer (a) or the layer (b). When the layer (a) or the layer (b) is provided so as to come into contact with an additional layer other than the support film, or when the multi-layer film of the present invention is designed in consideration of contact of the multi-layer film with an additional layer other than the support film, in order to enhance adhesion between the additional layer and the layer (a) or the layer (b), a tackifier or an adhesive may be applied onto the outer surface of the layer (a) or the layer (b). No particular limitation is imposed on the adhesive to be employed, and specific examples of the adhesive include solvent-soluble resins employed for dry laminating, anchor coating, or primers, such as alkyd resin, melamine resin, acrylic resin, nitrocellulose, urethane resin, polyester resin, polyether resin, phenolic resin, amino resin, fluorocarbon resin, and epoxy resin.

The multi-layer film of the present invention may be further laminated with an additional layer. An additional layer may be provided on the surface of the support film on which no layer has been laminated, or an additional layer may be provided on the surface of the layer (a) or the layer (b) on which no layer has been laminated. Specifically, the multi-layer film may have, for example, the following layer structure: (additional layer/support film/layer (a)/layer (b)), (additional layer/support film/additional layer/layer (a) /layer (b)), (support film/layer (a) /layer (b) /additional layer), (support film/layer (b) /layer (a) /additional layer), (support film/additional layer/layer (b)/layer (a)/layer (b)/additional layer), (additional layer/support film/layer (b) /layer (a) /layer (b)), or (support film/layer (b) /layer (a)/layer (b)/additional layer). The location of such an additional layer is not limited by these examples. The material of such an additional layer may be selected from among materials which can be employed for forming the support film. However, the additional layer material is not necessarily heat-shrinkable, so long as the resultant multi-layer film does not lose heat shrinkability. Examples of the additional layer material include materials having printability, materials having resistance to hard use, the aforementioned adhesives, tackifiers, and heat-sensitive tackifiers. One or more additional layers may be laminated on the multi-layer film in accordance with purposes; for example, the purposes of imparting, to the multi-layer film or sheet, strength, sealability (particularly for prevention of gas invasion through an end portion of the film), easy-to-open property, good appearance, light shielding property, and moisture-barrier property. Lamination of the additional layer(s) is performed through coating of a layer material, or through a known lamination method by use of a film-like or sheet-like layer material with or without use of an adhesive. Specific examples of the lamination method include a dry lamination method, a wet lamination method, and an extrusion lamination method.

The thus-produced heat-shrinkable multi-layer film of the present invention exhibits gas-barrier property, as well as heat shrinkability. The oxygen permeability of the multi-layer film as measured at 30°C and a relative humidity of 80% is 100 $cm^3/(m^2 \cdot day \cdot MPa)$ or less. After an object has been packaged with the multi-layer film of the present invention, and the resultant packaged product has been subjected to thermal shrinkage treatment, the oxygen permeability of the multi-layer film as measured at 30°C and a relative humidity of 80% is preferably 500 $cm^3/(m2 \cdot day \cdot MPa)$ or less, more preferably 100 $cm^3/(m2 \cdot day \cdot MPa)$ or less. As described above, thermal shrinkage treatment can be performed by use of, for example, hot water, vapor, steam, or hot air.

The multi-layer film of the present invention, which includes the heat-shrinkable support film coated with the layer (a) and the layer (b), exhibits sufficient heat shrinkability, which is attributed to the heat shrinkability of the support film (base film). The oxygen permeability of the multi-layer film after thermal shrinkage as measured at 30°C and a relative humidity of 80% is preferably equal to or lower than that thereof before thermal shrinkage. The result indicates that even when the film is subjected to thermal shrinkage, at least gas-barrier property of the multi-layer film is not deteriorated. Particularly preferably, the layer (b) formed of a polyvalent metal compound (B) is a polyvalent-metal-compound-containing resin layer.

The heat-shrinkable multi-layer film of the present invention can be employed as a material for forming a bag, a label, a cover, a sheet, or a container; or can be formed into a packaging bag or a packaging container. Specific examples of the form of the packaging bag include a pillow packaging bag, a three-sides-sealed packaging bag, a four-sides-sealed packaging bag, and a gazette four-sides-sealed packaging bag. Specific examples of the form of the packaging container include a bottle, a tray, a cup, and a tube. For example, a container filled with an object to be packaged is entirely or partially covered with the multi-layer film of the present invention or with a packaging bag formed of the multi-layer film, and the resultant product is subjected to thermal shrinkage treatment, so as to shrink the multi-layer film or the packaging bag and to bring the film or the bag into close contact with the container, whereby the resultant container ensures oxygen gas-barrier property. The multi-layer film of the present invention may be laminated with another film, and the resultant product may be employed as a cover material for a container (e.g., a tray or a cup). When the materials of the multi-layer film are appropriately chosen without departing from the scope of the present invention, the multi-layer film can be provided with, for example, easy-to-open property, easy-to-tear property, shrinkability, applicability to microwave ovens, UV-shielding property, or good appearance. Particularly when the multi-layer film is employed as a heat-shrinkable label, the label is often used for covering only the body of a bottle (e.g., a PET bottle) or a container. In this case, a tackifier (e.g., a heat-sensitive tackifier) is applied to the surface of the label that comes into contact with the container, and the label is caused to adhere to the container such that the label can effectively exhibit oxygen gas-barrier property. When the multi-layer film is employed as, for example, a label for a bottle (packaging container), preferably, a heat-sensitive tackifier is applied to the entirety of the label (including a peripheral portion which comes into contact with the packaging container, and a perforated portion).

As used herein, the term "heat-sensitive tackifier" refers to a material which is non-tacky at ambient temperature but exhibits tackiness under heating, and which maintains tackiness for a while after removal of a heating source. Examples of the heat-sensitive tackifier include a delayed tack agent formed of a thermoplastic resin, a solid plasticizer, and an adhesion-imparting agent; and a hot melt adhesive formed of a thermoplastic resin, a wax, and an adhesion-imparting agent. From the viewpoint of prevention of, for example, exfoliation of a label, a delayed tack agent, which maintains tackiness even after cooling, is more preferably employed. Examples of the delayed tack agent include an EVA-based agent, an acrylic agent, and a rubber-based agent.

In the present invention, a layer containing such a heat-sensitive tackifier and a polyvalent metal compound is also an embodiment of the polyvalent-metal-compound-containing resin layer. When the multi-layer film including such a heat-sensitive tackifier-containing layer is employed as a gas-barrier heat-shrinkable label for covering a container (e.g., a PET bottle), the container can be covered with the label through, for example, the following procedure: a sheet-form, tube-form, or bag-form label is attached to the container, and the label-attached container is caused to pass through a shrink tunnel in which thermal shrinkage treatment is performed through, for example, steam blowing or hot air blowing, to thereby heat-shrink the label, and simultaneously cause the label to adhere to the container on the basis of tackiness provided by the heat-sensitive tackifier.

The multi-layer film of the present invention is suitable for use as a packaging material, packaging container, or vacuum heat-insulating material for articles which are readily impaired by, for example, oxygen, including foods, beverages, chemicals, drugs, and precision metallic parts such as electronic parts. In addition, the multi-layer film is suitable for use as a packaging material for articles which require long-term reliable gas-barrier property, and require treatment in high-temperature hot water (e.g., boiling or retort sterilization).

Examples of food-related uses of the multi-layer film include packaging materials for convenience-store-related products, such as packed lunch, prepared food, cooked noodle, and *nabeyaki udon* (pot-boiled noodle); cover material of a container for pudding or fruit jelly; packaging materials for Chinese foods, and general prepared foods such as *tsukudani* (food boiled in soy sauce), pickles, and *nimame* (boiled beans); packaging materials for retort foods, Japanese confectionery, Western confectionery, processed marine products, processed meat products, fried foods, and fish-based paste products such as *kamaboko* (fish sausage) and *oden* (Japanese hotchpotch) ingredients; packaging materials for meats and fish-related products; and packaging materials for mushroom/vegetable-related products such as raw shiitake mushroom, *maitake* (Grifola frondosa), apple, banana, pumpkin, ginger, and *myoga* (Japanese ginger). The multi-layer film is also employed for single-, bundle-, or integrated-packaging of a beverage contained in a paper container, such as juice, milk, or a lactic acid bacteria beverage; or employed for single-, bundle-, or integrated-packaging of a beverage or food contained in a plastic container, such as a PET bottle beverage, juice, milk, a lactic acid bacteria beverage, or a pot noodle product.

Other examples of uses of the multi-layer film include packaging materials for paper products such as data sheets, photosensitive paper sheets, paper trays, and bag-in-box; packaging materials for electric appliances, electric products, mechanical components, and building materials such as plywood, floor material, ceiling material, storm door, shutter, gate, fence, and stocker; packaging materials for furniture, office machinery, fiber, metallic coils, cutting boards, tableware, and household groceries such as aluminum foil; packaging materials for doughnut-shaped products such as pipe products, electric wire products, tube products, string products, band products, and electromagnetic wave shielding tube products; packaging materials for stationery such as notebooks, albums, and calendars; packaging materials for chemicals such as drugs, spray products (aerosol), and detergents; packaging materials for cosmetic and toiletry products such as hair-related products, soap, toothpaste, and wet tissue; packaging materials for audiovisual-related products such as CDs, cassette tapes, and videotapes; packaging materials for earthenware; packaging materials for sporting goods, fishing goods, building materials such as columns, precision parts, and gasoline tanks; and a material for integrated packaging of dry batteries. The multi-layer film can be employed as a label for the aforementioned various packaging materials. Particularly, the multi-layer film is suitable for use as a label of, for example, a paper container for storing juice, milk, a lactic acid bacteria beverage, or the like, or a PET container (bottle) for storing a beverage.

EXAMPLES

The present invention will next be described in detail by way of Examples, which should not be construed as limiting the invention thereto. Evaluation methods and the Examples will be described below.

1. Evaluation methods for heat-shrinkable multi-layer film and the Examples

1.1 Measurement of percent thermal shrinkage

A film sample having dimensions of 10 cm x 10 cm was immersed in hot water at 90°C for 30 seconds, and then the percent thermal shrinkage of the film sample was calculated by use of the following formula:

$$\texttt{percent thermal shrinkage (\%) = \{(L - L')/L\} $\times$ 100}$$

(wherein L and L' represent the lengths of the sample in a machine direction or a transverse direction before thermal shrinkage and after thermal shrinkage, respectively). The thus-determined percent thermal shrinkage in at least one direction of the film of the present invention is 3 to 90%.

1.2 Evaluation of appearance

A heat-shrinkable multi-layer film was subjected to 10% shrinkage in a transverse direction through the below-described procedure under dry heating or in hot water, and the appearance of the thus-shrunk film was evaluated on the basis of the below-described criteria.

1.2.1 10% Shrinkage under dry heating

A steel can (outer diameter: 53 mm, volume capacity:

250 cm$^3$) was covered with a heat-shrinkable multi-layer film which had been formed into a tubular shape such that when the film undergoes 10% shrinkage in a transverse direction, the film adheres to the steel can. Subsequently, the film-covered steel can was allowed to stand for one minute in a Geer oven whose temperature was regulated to 95°C, and was exposed to hot air, to thereby heat-shrink the film.

1.2.2 10% Shrinkage in hot water

A steel can (outer diameter: 53 mm, volume capacity:

250 cm$^3$) was covered with a heat-shrinkable multi-layer film which had been formed into a tubular shape such that when the film undergoes 10% shrinkage in a transverse direction, the film adheres to the steel can. Subsequently, the film-covered steel can was immersed in hot water at 90°C for 30 seconds, to thereby heat-shrink the film. The appearance of the heat-shrinkable multi-layer film which had undergone 10% thermal shrinkage in a transverse direction was evaluated.

1.2.3 Evaluation criteria

Appearance of the thus-shrunk film was evaluated on the basis of the following criteria:

A: neither wrinkles nor slack is formed on the multi-layer film; cracking, breakage, and exfoliation do not occur in a coating layer; and the coating layer maintains transparency.
B: neither wrinkles nor slack is formed on the multi-layer film, but a coating layer exhibits impaired transparency.

C: wrinkles or slack is formed on the multi-layer film; cracking, breakage, or exfoliation occurs in a coating layer; and the coating layer exhibits impaired transparency.

1.3 Oxygen permeability before and after shrinkage

Oxygen permeability of a heat-shrinkable multi-layer film was measured before and after thermal shrinkage of the film. Thermal shrinkage of the film was performed under dry heating and in hot water under the above-described 10% thermal shrinkage conditions.

The oxygen permeability of the film was measured by use of an oxygen permeability measuring apparatus (OXTRAN™ 2/20, product of Modern Control) under the following conditions: temperature: 30°C and relative humidity (RH): 80%. The oxygen permeability was measured in accordance with JIS K-7126, B method (equal-pressure method) and the method specified by ASTM D3985-81. The thus-measured value is represented in units of $cm^3(STP)/(m^2 \cdot day \cdot MPa)$. As used herein, "(STP)" refers to standard conditions (0°C, 1 atm) for specifying the volume of oxygen.

(Example 1)

A commercially available adhesive for anchor coating (AC) (Dicdry™ LX747, product of Dainippon Ink and Chemicals, Inc., curing agent: KX75, solvent: ethyl acetate) was applied onto a heat-shrinkable polyester film (Space Clean S7542, product of Toyobo Co., Ltd., thickness: 45 $\mu$m, oxygen permeability: 600 $cm^3(STP)/(m^2 \cdot day \cdot MPa)$, percent shrinkage in a machine direction: 5%, percent shrinkage in a transverse direction: 60% (as measured after immersion in hot water at 90°C for 30 seconds)) (hereinafter the film may be referred to as a "heat-shrinkable PET film") by use of a bar coater (K303PROOFER, product of RK PRINT-COAT INSTRUMENT), followed by drying of the adhesive. The resultant coating layer was found to have a thickness of 1.0 $\mu$m. Separately, a poly(carboxylic acid) polymer (polyacrylic acid (PAA), Aron A-10H, product of Toagosei Co., Ltd., number average molecular weight: 200,000, 25 wt.% aqueous solution) (hereinafter the polymer may be referred to as "PAA") was diluted with distilled water, to thereby prepare a 5 wt.% aqueous solution. The thus-prepared aqueous solution was applied onto the AC adhesive coating layer by use of the aforementioned bar coater, followed by drying. The resultant coating layer was found to have a thickness of 0.3 $\mu$m.

Subsequently, in a manner similar to that described above, a zinc-oxide-fine-particles-containing polyester resin (ZR133, product of Sumitomo Osaka Cement Co., Ltd., average particle size: 0.02 $\mu$m, solid content: 33 wt.%, ratio by weight of zinc oxide to resin: 1.5, solvent for dispersion (toluene : MEK = 4 : 1)) was applied onto the above-dried PAA layer, followed by drying. The resultant coating layer was found to have a thickness of 1.0 $\mu$m. Thus, there was produced a multi-layer film having the following layer structure: heat-shrinkable PET film (45 $\mu$m)/AC adhesive layer (1.0 $\mu$m)/PAA layer (0.3 $\mu$m)/ZnO-containing resin layer (abbreviated as "ZnOA" in the Tables, wherein A refers to a resin layer) (1.0 $\mu$m). The ratio of the thickness of the gas-barrier layer to that of the base film was found to be 0.03. When the thus-produced multi-layer film was immersed in hot water at 90°C for 30 seconds, the film exhibited a percent shrinkage of 5% in a machine direction and a percent shrinkage of 60% in a transverse direction.

(Example 2)

In place of the AC adhesive, the zinc-oxide-fine-particles-containing resin (ZR133) employed in Example 1 was applied onto the aforementioned heat-shrinkable PET film in a manner similar to that of Example 1, followed by drying. The resultant coating layer was found to have a thickness of 1.0 $\mu$m. Subsequently, the poly(carboxylic acid) polymer (PAA) employed in Example 1 was applied onto the coating layer, and then the aforementioned zinc-oxide-fine-particles-containing resin (ZR133) was applied onto the resultant PAA layer, followed by drying, to thereby produce a multi-layer film having the following layer structure: heat-shrinkable PET film (45 $\mu$m)/ZnO-containing resin layer (1.0 $\mu$m)/PAA layer (0.3 $\mu$m)/ZnO-containing resin layer (1.0 $\mu$m). The ratio of the thickness of the gas-barrier layer to that of the base film was found to be 0.05. When the thus-produced multi-layer film was immersed in hot water at 90°C for 30 seconds, the film exhibited a percent shrinkage of 5% in a machine direction and a percent shrinkage of 60% in a transverse direction.

(Example 3)

The procedure of Example 1 was repeated, except that an adhesive for anchor coating was not employed, and the thickness of a zinc-oxide-fine-particles-containing resin coating layer was changed. Specifically, PAA was applied onto the heat-shrinkable PET film, and the zinc-oxide-fine-particles-containing resin (ZR133) was applied onto the resultant PAA layer, followed by drying, to thereby produce a multi-layer film having the following layer structure: heat-shrinkable PET film (45 $\mu$m)/PAA layer (0.3 $\mu$m)/ZnO-containing resin layer (3.0 $\mu$m) The ratio of the thickness of the gas-barrier layer to that of the base film was found to be 0.07. When the thus-produced multi-layer film was immersed in hot water at 90°C for 30 seconds, the film exhibited a percent shrinkage of 5% in a machine direction and a percent shrinkage of 60% in a transverse direction.

(Example 4)

The procedure of Example 2 was repeated, except that a heat-shrinkable polyamide film (BONYL SC, product of Kohjin Co., Ltd., thickness: 15 $\mu$m, percent shrinkage in a machine direction: 20%, percent shrinkage in a transverse direction: 20% (as measured after immersion in hot water at 90°C for 30 seconds), oxygen permeability: 1,250 cm$^3$(STP) /(m$^2$·day·MPa)) (hereinafter the film may be referred to as a "heat-shrinkable ONy film") was employed as a support film. Specifically, the zinc-oxide-fine-particles-containing resin (ZR133) employed in Example 1 was applied onto the heat-shrinkable ONy film, followed by drying. The resultant coating layer was found to have a thickness of 1.0 $\mu$m. Subsequently, the PAA employed in Example 1 was applied onto the coating layer, and then the aforementioned zinc-oxide-fine-particles-containing resin (ZR133) was applied onto the resultant PAA layer, followed by drying, to thereby produce a multi-layer film having the following layer structure: heat-shrinkable ONy film (15 $\mu$m)/ZnO-containing resin layer (1.0 $\mu$m)/PAA layer (0.3 $\mu$m)/ZnO-containing resin layer (1.0 $\mu$m). The ratio of the thickness of the gas-barrier layer to that of the base film was found to be 0.15. When the thus-produced multi-layer film was immersed in hot water at 90°C for 30 seconds, the film exhibited a percent shrinkage of 20% in a machine direction and a percent shrinkage of 20% in a transverse direction.

(Example 5)

In a manner similar to that of Example 1, the adhesive for anchor coating (AC) and PAA were applied onto the heat-shrinkable PET film employed in Example 1, followed by drying. Subsequently, a mixture of an aqueous polyvinyl alcohol (PVA) solution (solid content: 10 wt.%) and an aqueous calcium acetate solution (containing calcium acetate produced by Wako Pure Chemical Industries, Ltd., concentration: 1.0 mol/kg) was applied onto the above-dried PAA layer in a manner similar to that described above, followed by drying. The resultant coating layer was found to have a thickness of 1.0 $\mu$m. Subsequently, a polyurethane (PU) resin (NEWLP SUPER RT medium, product of Toyo Ink Mfg. Co., Ltd., curing agent: VM Hardener XB, solvent: toluene, MEK) was applied onto the calcium-acetate-containing PVA coating layer, for the purpose of imparting water resistance. Thus, there was produced a multi-layer film having the following layer structure: heat-shrinkable PET film (45 $\mu$m)/AC adhesive layer (1.0 $\mu$m)/PAA layer (0.3 $\mu$m)/calcium-acetate-containing PVA layer (1.0 $\mu$m)/PU resin layer (1.0 $\mu$m). The ratio of the thickness of the gas-barrier layer to that of the base film was found to be 0.03. When the thus-produced multi-layer film was immersed in hot water at 90°C for 30 seconds, the film exhibited a percent shrinkage of 5% in a machine direction and a percent shrinkage of 60% in a transverse direction.

(Example 6)

In a manner similar to that of Example 3, an adhesive for anchor coating was not employed, and PAA was applied onto the heat-shrinkable PET film. Subsequently, in place of the zinc-oxide-fine-particles-containing resin, zinc oxide fine particles (ZS303, product of Sumitomo Osaka Cement Co., Ltd., average particle size: 0.02 $\mu$m, solid content (zinc oxide): 32 wt.%, solvent for dispersion (toluene)) were applied onto the resultant PAA layer, followed by drying. Subsequently, a polyurethane (PU) resin (NEWLP SUPER RT medium, product of Toyo Ink Mfg. Co., Ltd., curing agent: VM Hardener XB, solvent (toluene, MEK)) was applied onto the zinc oxide coating layer, for the purpose of imparting water resistance. Thus, there was produced a multi-layer film having the following layer structure: heat-shrinkable PET film (45$\mu$ m)/PAA layer (0.3 $\mu$m)/zinc-oxide-fine-particles-containing layer (abbreviated as "ZnOB" in the Tables) (1.0 $\mu$m)/PU resin layer (1.0 $\mu$m). The ratio of the thickness of the gas-barrier layer to that of the base film was found to be 0.03. When the thus-produced multi-layer film was immersed in hot water at 90°C for 30 seconds, the film exhibited a percent shrinkage of 5% in a machine direction and a percent shrinkage of 60% in a transverse direction.

(Comparative Example 1)

The zinc-oxide-fine-particles-containing resin (ZR133) employed in Example 1 was applied onto the surface of the heat-shrinkable PET film employed in Example 1, followed by drying, to thereby produce a multi-layer film having the following layer structure: heat-shrinkable PET film (45 $\mu$m)/ZnO-containing resin layer (1.0 $\mu$m). When the thus-produced multi-layer film was immersed in hot water at 90°C for 30 seconds, the film exhibited a percent shrinkage of 5% in a machine direction and a percent shrinkage of 60% in a transverse direction.
Table 1 shows the results of evaluation of the multi-layer films produced in Examples 1 through 6 and Comparative Example 1.

Table 1

| | Layer structure | Appearance evaluation | | Oxygen permeability (cm³(STP)/m²·day·MPa) | | |
|---|---|---|---|---|---|---|
| | | After 10% shrinkage under dry heating | After 10% in shrinkage hot water | Before shrinkage | After 10% shrinkage under dry heating | After 10% shrinkage in hot water |
| Ref. Ex. 1 | HSPET*1 (45) μm | A | A | 600 | 600 | 600 |
| Ref. Ex. 2 | HSONy*2 (15) μm | A | A | 1250 | 1250 | 1250 |
| Ex. 1 | HSPET/AC*3/PAA*4/ ZnOA*5 (45)/(1.0)/ (0.3)/(1.0) μm | A | A | 60 | 40 | 40 |
| Ex. 2 | HSPET/ZnOA/PAA/ ZnOA (45)/(1.0)/(0.3) /(1.0) μm | A | A | 40 | 10 | 10 |
| Ex. 3 | HSPET/PAA/ZnOA (45)/(0.3)/(3.0)μm | A | A | 60 | 40 | 40 |
| Ex. 4 | HSONy*2/ ZnOA/PAA/ZnOA (15)/(1.0)/(0.3)/(1.0) μm | A | A | 60 | 40 | 40 |
| Ex. 5 | HSPET/AC/PAA/ CaAc /PU*7 (45)/(1.0) /(0.3)/(1.0)/(1.0) μm | A | A | 60 | 40 | 40 |
| Ex. 6 Ex. 6 | HSPET/PAA/ ZnOB*8/PU (45)/(0.3) /(1.0)/(1.0) μm | A | A | 200 | 200 | 200 |
| Comp. Ex. 1 | HSPET/ZnOA (45)/ (1.0) μm | A | A | 600 | 600 | 600 |

HSPET*1: Heat-shrinkable polyester (Space Clean S7542, product of Toyobo Co., Ltd., thickness: 45 μm)

kSONy*2: Heat-shrinkable polyamide (BONYL SC, product of Kohjin Co., Ltd., thickness: 15 μm)

AC*3: Adhesive for anchor coating (Dicdry™ LX747, product of Dainippon Ink and Chemicals, Inc., curing agent: KX75, solvent: ethyl acetate) PAA*4 : Polyacrylic acid (PAA) (Aron A-10H, product of Toagosei Co., Ltd., number average molecular weight: 200,000, 25 wt.% aqueous solution diluted with distilled water)

ZnOA*5: Zinc-oxide-fine-particles-containing resin (ZR133, product of Sumitomo Osaka Cement Co., Ltd., average particle size: 0.02 μm, solid content: 33 wt.%, solvent for dispersion: toluene, MEK) CaAc*6: Polyvinyl alcohol containing calcium acetate (product of Wako Pure Chemical Industries, Ltd.)

PU*7: Polyurethane resin (NEWLP SUPER RT medium, product of Toyo Ink Mfg. Co., Ltd., curing agent: VM Hardener XB, solvent: toluene, MEK)

ZnOB*8: Zinc oxide fine particles (ZS303, product of Sumitomo Osaka Cement Co., Ltd., average particle size: 0.02 μm, solid content: 32 wt.%, solvent for dispersion: toluene)

2. Examples in which a heat-shrinkable multi-layer film is employed as a label for a PET bottle, and is subjected to evaluation

In the below-described Examples, tests were performed with the intention of using a heat-shrinkable multi-layer film for improving gas-barrier property of a container (e.g., a packaging container) containing an object. In the Examples, in order to evaluate a heat-shrinkable multi-layer film of the present invention, a packaging container was partially covered with the multi-layer film; specifically, the multi-layer film was employed as a label, and the body of a PET bottle was partially covered with the film. In order to evaluate gas-barrier property of the heat-shrinkable multi-layer film, the film was combined with the packaging container by use of a heat-sensitive tackifier.

2.1 Evaluation of appearance

A heat-shrinkable multi-layer film was combined with a PET bottle (volume capacity: 500 cm$^3$), and the film was subjected to 10% shrinkage in a transverse direction through the below-described procedure under dry heating, followed by evaluation of the appearance of the thus-shrunk film.

2.1.1 10% Shrinkage under dry heating

A PET bottle was covered with a heat-shrinkable multi-layer film which had been formed into a tubular shape such that when the film undergoes 10% shrinkage in a transverse direction, the film adheres to the PET bottle. Subsequently, the film-covered PET bottle was allowed to stand for one minute in a Geer oven whose temperature was regulated to 95°C, and was exposed to hot air, to thereby heat-shrink the film. Thermal shrinkage was performed such that the surface area of a region of the PET bottle covered with the thus-shrunk multi-layer film accounts for about 80% of the entire surface area of the PET bottle. The appearance of the heat-shrinkable multi-layer film which had undergone 10% thermal shrinkage in a transverse direction and which had been combined with the PET bottle was evaluated.

2.1.2 Evaluation criteria

A: neither wrinkles nor slack is formed on the multi-layer film; the film adheres to the container; cracking, breakage, and exfoliation do not occur in a coating layer; and the coating layer maintains transparency.
B: neither wrinkles nor slack is formed on the multi-layer film, and the film adheres to the container, but a coating layer exhibits impaired transparency.
C: wrinkles or slack is formed on the multi-layer film; the film does not adhere to the container; cracking, breakage, or exfoliation occurs in a coating layer; and the coating layer exhibits impaired transparency.

2.2 Oxygen permeability after shrinkage

The oxygen permeability of the PET bottle which had been combined with the multi-layer film by use of a tackifier was measured through the following two methods: a method in which the bottle *per se* is subjected to measurement (hereinafter this method will be referred to as "the package method"); and a method in which a portion of the bottle that is covered with the multi-layer film is cut out of the bottle, and the cut portion is subjected to measurement (hereinafter this method will be referred to as "the film method"). In the package method, the bottle was fixated in a chamber (temperature: 30°C, relative humidity: 30%), nitrogen (relative humidity: 80%) was caused to flow through the bottle, and the amount of oxygen which permeates from the outside (air atmosphere) of the bottle into the bottle was measured by use of the oxygen permeability measuring apparatus employed in 1.3 described above. The thus-measured value was multiplied by five, and the resultant value was regarded as the value in the case where a space outside the bottle (inside the chamber) is filled with 100% oxygen; i.e., the oxygen permeability of the bottle. In the film method, the oxygen permeability was measured in a manner similar to that described above in 1.3. The oxygen permeability measured through the package method is represented in units of cm$^3$ (STP)/(bottle·day·MPa), whereas the oxygen permeability measured through the film method is represented in units of cm$^3$(STP)/(m2·dayMPa).

(Example 7)

A heat-sensitive tackifier (Heat Magic DW4070, product of Toyo Ink Mfg. Co., Ltd.) was applied onto the surface of the ZnO-containing resin layer (opposite the surface of the heat-shrinkable PET film) of the multi-layer film of Example 2, such that the multi-layer film adheres to an object to be packaged during the course of thermal shrinkage of the film, followed by drying of the adhesive. The resultant heat-shrinkable multi-layer film (percent shrinkage in a machine direction: 5%, percent shrinkage in a transverse direction: 60% (as measured after immersion in hot water at 90°C for 30 seconds)) was formed into a cylindrical shape such that the adhesive layer faces inward. The body of a commercially available 500-mL PET bottle was covered with the thus-formed cylindrical multi-layer film. Subsequently, the film-covered PET bottle was allowed to stand for one minute in a Geer oven whose temperature was regulated to 95°C, and was exposed to hot air, to thereby heat-shrink the film and combine the film with the bottle.

Thus, there was produced a packaging container having the following structure: heat-shrinkable PET film (45 μm)/ZnO-containing resin layer (1.0 μm)/PAA layer (0.3 μm)/ZnO-containing resin layer (1.0 μm)/tackifier layer (3.0 μm)/PET bottle (average thickness: 350 μm). The surface area of the multi-layer film combined with the PET bottle surface was found to account for 80% of the entire surface area of the PET bottle. The oxygen permeability of the PET bottle *per se* was found to be 2.0 cm$^3$(STP)/(bottle·day·MPa) at 30°C and a relative humidity of 80%.

(Example 8)

The heat-sensitive tackifier employed in Example 7 was applied onto the surface of the heat-shrinkable PET film of the multi-layer film of Example 2, such that the multi-layer film adheres to an object to be packaged during the course of thermal shrinkage of the film, followed by drying of the adhesive. The resultant heat-shrinkable multi-layer film (percent shrinkage in a machine direction: 5%, percent shrinkage in a transverse direction: 60% (as measured after immersion in hot water at 90°C for 30 seconds)) was formed into a cylindrical shape such that the tackifier layer faces inward. In a manner similar to that of Example 7, the body of a commercially available 500-mL PET bottle was covered with the thus-formed cylindrical multi-layer film. Subsequently, the film-covered PET bottle was allowed to stand for one minute in a Geer oven whose temperature was regulated to 95°C, and was exposed to hot air, to thereby heat-shrink the film and combine the film with the bottle. Thus, there was produced a packaging container having the following structure: ZnO-containing resin layer (1.0 μm)/PAA layer (0.3 μm)/ZnO-containing resin layer (1.0 μm)/heat-shrinkable PET film (45 μm)/tackifier layer (3.0 μm)/PET bottle (average thickness: 350 μm). The surface area of the multi-layer film combined with the PET bottle surface was found to account for 80% of the entire surface area of the PET bottle.

(Comparative Example 2)

The heat-sensitive tackifier employed in Example 7 was applied onto the heat-shrinkable PET film employed in Example 1, followed by drying. The resultant heat-shrinkable multi-layer film (percent shrinkage in a machine direction: 5%, percent shrinkage in a transverse direction: 60% (as measured after immersion in hot water at 90°C for 30 seconds)) was formed into a cylindrical shape such that the adhesive layer faces inward. In a manner similar to that of Example 7, the body of a commercially available 500-mL PET bottle was covered with the thus-formed cylindrical multi-layer film. Subsequently, the film-covered PET bottle was allowed to stand for one minute in a Geer oven whose temperature was regulated to 95°C, and was exposed to hot air, to thereby heat-shrink the film and combine the film with the bottle. Thus, there was produced a packaging container having the following structure: heat-shrinkable PET film (45 μm)/tackifier layer (3.0 μm)/PET bottle (average thickness: 350 μm). The surface area of the heat-shrinkable PET film combined with the PET bottle surface was found to account for 80% of the entire surface area of the PET bottle.

Table 2 shows the results of evaluation of the multi-layer films produced in Examples 7 and 8 and Comparative Example 2.

Table 2

| | Layer structure | Appearance evaluation | Oxygen permeability | |
|---|---|---|---|---|
| | | | Package method (cm$^3$ (STP)/bottle·day·MPa) | Film method (cm$^3$(STP) /m$^2$·day·MPa) |
| Ref. Ex. 3 | PETb[*1] (average: 350 μm) | - | 2.0 | 50 |
| Ex. 7 | HSPET[*2]/ ZnOA[*3]/PAA[*4]/ ZnOA/Ad[*5]/PETb (45) /(1.0)/(0.3)/(1.0)/(3.0)/ (350) | A | 0.4 | 5.0 |
| Ex. 8 | ZnO/PAA/ZnOA/ HSPET/Ad/PETb (1.0)/(0.3)/(1.0)/(45)/ (3.0)/(350) | A | 0.2 | 3.0 |

(continued)

| | Layer structure | Appearance evaluation | Oxygen permeability | |
|---|---|---|---|---|
| | | | Package method (cm$^3$ (STP)/bottle·day·MPa) | Film method (cm$^3$(STP) /m$^2$·day·MPa) |
| Comp. Ex. 2 | HSPET/Ad/PETb (45) /(3.0)/(350) | A | 2.0 | 50 |

PETB[*1]: Commercially available PET bottle (volume capacity: 500 cm$^3$)
HSPET[*2]: Heat-shrinkable polyester (Space Clean S7542, product of Toyobo Co., Ltd., thickness: 45 $\mu$m)
ZNOA[*3]: Zinc-oxide-fine-particles-containing resin (ZR133, product of Sumitomo Osaka Cement Co., Ltd., average particle size: 0.02 $\mu$m, solid content: 33 wt.%, solvent for dispersion: toluene, MEK)
PAA[*4]: Polyacrylic acid (PAA) (Aron A-10H, product of Toagosei Co., Ltd., number average molecular weight: 200,000, 25 wt.% aqueous solution diluted with water)
Ad[*5]: Heat-sensitive tackifier (Heat Magic DW4070, product of Toyo Ink Mfg. Co., Ltd.)

3. Examples in which a heat-shrinkable multi-layer film is employed for entirely covering an object, and is subjected to evaluation

In the below-described Examples, in order to evaluate a heat-shrinkable multi-layer film, an object is entirely covered with the film. Specifically, a sausage product was packaged with the heat-shrinkable multi-layer film, and then the film was subjected to evaluation.

(Example 9)

Through dry lamination, a heat-shrinkable polyethylene film (Polyset UM, Product of Kohjin Co., Ltd., thickness: 35 $\mu$m, percent shrinkage in a machine direction: 15%, percent shrinkage in a transverse direction: 18% (as measured after immersion in hot water at 90°C for 30 seconds)) was attached, via a polyurethane adhesive (Takelac A620, product of Mitsui Takeda Chemicals, Inc., curing agent: Takenate A65, solvent: ethyl acetate), onto the surface of the ZnO-containing resin layer of the heat-shrinkable multi-layer film produced in Example 4, to thereby produce a multi-layer film having the following layer structure: heat-shrinkable ONy film (15 $\mu$m)/ZnO-containing resin layer (1.0 $\mu$m)/PAA layer (0.3 $\mu$m)/ZnO-containing resin layer (1.0 $\mu$m)/adhesive layer (2 $\mu$m)/heat-shrinkable polyethylene film (35 $\mu$m). A sausage product was packaged with the thus-produced multi-layer film by use of a bag-forming and packaging machine (ONPACK-6600AII, product of Orihiro Co., Ltd.). The resultant packaged product was immersed in hot water at 90°C for 10 minutes, to thereby perform thermal shrinkage and simultaneously thermal sterilization. After completion of thermal shrinkage, substantially no change in the shape of the sausage product was observed, and the packaged product exhibited good appearance, with the film being sufficiently tightly fitted to the sausage product. No breakage was observed in the thus-shrunk film. The oxygen permeability of the thus-shrunk film was found to be 1.0 cm$^3$(STP)/(m$^2$·day·MPa) at 30°C and a relative humidity of 80%.

(Comparative Example 3)

By means of dry lamination, the heat-shrinkable polyethylene film employed in Example 9 was attached, via the adhesive employed in Example 9, onto one surface of the heat-shrinkable ONy film employed in Example 4, to thereby produce a multi-layer film having the following layer structure:

heat-shrinkable ONy film (15 $\mu$m)/adhesive layer (2 $\mu$m)/heat-shrinkable polyethylene film (35 $\mu$m). A sausage product was packaged with the thus-produced multi-layer film by use of the bag-forming and packaging machine described above in Example 9. The sausage-packaged product was immersed in hot water at 90°C for 10 minutes, to thereby perform thermal shrinkage and simultaneously thermal sterilization. After completion of thermal shrinkage, substantially no change in the shape of the sausage product was observed, and the packaged product exhibited good appearance, with the film being sufficiently tightly fitted to the sausage product. No breakage was observed in the thus-shrunk film. The oxygen permeability of the thus-shrunk film was found to be 1,200 cm$^3$(STP)/ (m$^2$·day·MPa) at 30°C and a relative humidity of 80%.

INDUSTRIAL APPLICABILITY

The present invention provides a heat-shrinkable multi-layer film which is a packaging material exhibiting gas-barrier property, and which is employed for shrink packaging of an object without use of a container or a cover material, or for shrink packaging of the entirety of a container.

**Claims**

1. A heat-shrinkable multi-layer film comprising a heat-shrinkable support film (base film) exhibiting a percent thermal shrinkage in at least one direction of 5 to 90% as measured by immersing the support film in hot water at 90°C for 30 seconds and, provided on at least one surface of the support film, at least one layer structure including a layer (a) formed of a poly(carboxylic acid) polymer (A) and a layer (b) formed of a polyvalent metal compound (B), the layers (a) and (b) being in contact with each other, wherein the multi-layer film exhibits a percent thermal shrinkage in at least one direction of 5 to 90% as measured by immersing the multi-layer film in hot water at 90°C for 30 seconds, and wherein the multi-layer film exhibits an oxygen permeability of 100 $cm^3/(m^2 \cdot day \cdot MPa)$ or less as measured at 30°C and a relative humidity of 80% after thermal shrinkage treatment.

2. A heat-shrinkable multi-layer film according to claim 1, wherein the layer (b) formed of the polyvalent metal compound (B) is a polyvalent-metal-compound-containing resin layer formed of the polyvalent metal compound (B) and a resin.

3. A heat-shrinkable multi-layer film according to claim 1 or 2, wherein the ratio of the total thickness of a gas-barrier layer formed of the layers (a) and (b) which are in contact with each other to that of the support film is 0.001 to 0.5.

4. A heat-shrinkable multi-layer film according to any one of claims 1 to 3, wherein the polyvalent metal compound (B) is a divalent metal compound.

5. A heat-shrinkable multi-layer film according to any one of claims 1 to 4, wherein the poly(carboxylic acid) polymer (A) is a homopolymer or copolymer formed of at least one polymerizable monomer selected from among acrylic acid, maleic acid, and methacrylic acid, and/or a mixture of such homopolymers or copolymers.

6. A heat-shrinkable multi-layer film according to any one of claims 1 to 5, which contains an additional layer.

7. A heat-shrinkable multi-layer film according to claim 6, wherein the additional layer is an adhesive-containing layer.

8. A heat-shrinkable multi-layer film according to any one of claims 1 to 7, which, after thermal shrinkage treatment, exhibits an oxygen permeability equal to or lower than that before thermal shrinkage treatment.

9. A packaging material comprising a heat-shrinkable multi-layer film as recited in any one of claims 1 to 8.

10. A packaging material according to claim 9, which is in the form of a bag, a sheet, a label, a container, or a cover material.

11. A heat-shrinkable label according to claim 10, to which a heat-sensitive tackifier has been applied.

12. A method for producing a heat-shrinkable multi-layer film comprising the Steps of

    (i) coating at least one surface of a heat-shrinkable support film (base film) with a coating liquid containing a poly (carboxylic acid) polymer (A) or a monomer of poly (carboxylic acid) polymer (A) which is polymerized after coating; and a solvent and subsequently removing the solvent, and
    (ii) coating the support film with a coating liquid containing a polyvalent metal compound (B) and a solvent and subsequently removing the solvent,
    wherein steps (i) and (ii) may be carried out in either order such that at least one layer structure including a layer (a) formed of poly (carboxylic acid) polymer (A) and a layer (b) formed of a polyvalent metal compound (B) wherein the layers (a) and (b) are in contact with each other, is formed on the support film,
    wherein the support film exhibits a percent thermal shrinkage in at least one direction of 5 to 90% as measured by immersing the support film in hot water at 90°C for 30 seconds, and
    wherein the multi-layer film exhibits a percent thermal shrinkage in at least one direction of 5 to 90% as measured by immersing the multi-layer film in hot water at 90°C for 30 seconds, and wherein the multi-layer film exhibits an oxygen permeability of 100 cm$^3$/(m$^2$·day·MPa) or less as measured at 30°C and a relative humidity of 80%after thermal shrinkage treatment.

13. A method according to claim 12, wherein the heat-shrinkable multilayer film is further laminated with an additional layer, either as an additional layer on the surface of the layer (a) or the layer (b) on which no layer has been coated or on the surface of the support film on which no layer has been coated.

**Patentansprüche**

1. Wärmeschrumpfbare Mehrschichtfolie, umfassend eine wärmeschrumpfbare Trägerfolie (Grundfolie), die einen Wärmeschrumpfprozentsatz in mindestens einer Richtung von 5 bis 90 %, wie durch 30 Sekunden langes Eintauchen der Trägerfolie in heißes Wasser von 90 °C gemessen, aufweist und, auf mindestens einer Oberfläche der Trägerfolie bereitgestellt, mindestens eine Schichtstruktur umfassend eine Schicht (a), die aus einem Poly(carbonsäure)polymer (A) gebildet ist, und eine Schicht (b), die aus einer mehrwertigen Metallverbindung (B) gebildet ist, wobei die Schichten (a) und (b) in Kontakt miteinander stehen, wobei die Mehrschichtfolie einen Wärmeschrumpfungsprozentsatz in mindestens einer Richtung von 5 bis 90 %, wie durch 30 Sekunden langes Eintauchen der Mehrschichtfolie in heißes Wasser von 90 °C gemessen, aufweist und wobei die Mehrschichtfolie eine Sauerstoffdurchlässigkeit von 100 cm$^3$/(m$^2$·Tag·MPa) oder weniger, wie bei 30 °C und einer relativen Feuchte von 80 % nach der Wärmeschrumpfbehandlung gemessen, aufweist.

2. Wärmeschrumpfbare Mehrschichtfolie nach Anspruch 1, wobei die Schicht (b), die aus der mehrwertigen Metallverbindung (B) gebildet ist, eine eine mehrwertige Metallverbindung enthaltende Harzschicht ist, die aus der mehrwertigen Metallverbindung (B) und einem Harz gebildet ist.

3. Wärmeschrumpfbare Mehrschichtfolie nach Anspruch 1 oder 2, wobei das Verhältnis der Gesamtdicke einer Gasbarriereschicht, die aus den Schichten (a) und (b), die in Kontakt miteinander stehen, gebildet ist, zu der der Trägerfolie 0,001 bis 0,5 beträgt.

4. Wärmeschrumpfbare Mehrschichtfolie nach einem der Ansprüche 1 bis 3, wobei die mehrwertige Metallverbindung (B) eine zweiwertige Metallverbindung ist.

5. Wärmeschrumpfbare Mehrschichtfolie nach einem der Ansprüche 1 bis 4, wobei das Poly(carbonsäure)polymer (A) ein Homopolymer oder Copolymer, das aus mindestens einem polymerisierbaren Monomer ausgewählt unter Acrylsäure, Maleinsäure und Methacrylsäure gebildet ist, und/oder eine Mischung derartiger Homopolymere oder Copolymere ist.

6. Wärmeschrumpfbare Mehrschichtfolie nach einem der Ansprüche 1 bis 5, die eine zusätzliche Schicht enthält.

7. Wärmeschrumpfbare Mehrschichtfolie nach Anspruch 6, wobei die zusätzliche Schicht eine klebstoffhaltige Schicht ist.

8. Wärmeschrumpfbare Mehrschichtfolie nach einem der Ansprüche 1 bis 7, die nach der Wärmeschrumpfbehandlung eine Sauerstoffdurchlässigkeit aufweist, die gleich wie oder geringer als diejenige vor der Wärmeschrumpfbehandlung ist.

9. Verpackungsmaterial umfassend eine wärmeschrumpfbare Mehrschichtfolie wie in einem der Ansprüche 1 bis 8 angegeben.

10. Verpackungsmaterial nach Anspruch 9, die in Form eines Beutels, einer Folie, eines Etiketts, eines Behälters oder eines Bedeckungsmaterials vorliegt.

11. Wärmeschrumpfbares Etikett nach Anspruch 10, auf das ein wärmeempfindlicher Klebrigmacher aufgebracht worden ist.

12. Verfahren zum Herstellen einer wärmeschrumpfbare Mehrschichtfolie, umfassend die Schritte des

   (i) Beschichtens mindestens einer Oberfläche einer wärmeschrumpfbare Trägerfolie (Grundfolie) mit einer Beschichtungsflüssigkeit enthaltend ein Poly(carbonsäure)polymer (A) oder ein Monomer des Poly(carbonsäure)polymers (A), das nach dem schichtförmigen Aufbringen polymerisiert wird; und ein Lösungsmittel und daraufhin das Entfernen des Lösungsmittels und

(ii) das Beschichten der Trägerfolie mit einer Beschichtungsflüssigkeit, die eine mehrwertige Metallverbindung (B) und ein Lösungsmittel enthält und daraufhin das Entfernen des Lösungsmittels,

wobei die Schritte (i) und (ii) in irgendeiner Reihenfolge durchgeführt werden können, derart, dass mindestens eine Schichtstruktur, die eine aus Poly(carbonsäure)polymer (A) gebildete Schicht (a) und eine aus einer mehrwertigen Metallverbindung (B) gebildete Schicht (b) umfasst, wobei die Schichten (a) und (b) mit einander in Kontakt stehen, auf der Trägerfolie gebildet ist,

wobei die Trägerfolie einen Wärmeschrumpfungsprozentsatz in mindestens einer Richtung von 5 bis 90 %, wie durch 30 Sekunden langes Eintauchen der Trägerfolie in heißes Wasser von 90 °C gemessen, aufweist und wobei die Mehrschichtfolie einen Wärmeschrumpfprozentsatz in mindestens einer Richtung von 5 bis 90 %, wie durch 30 Sekunden langes Eintauchen der Mehrschicht in heißes Wasser von 90 °C gemessen, aufweist und wobei die Mehrschichtfolie eine Sauerstoffdurchlässigkeit von 100 cm$^3$/(m$^2$·Tag·MPa) oder weniger, wie bei 30 °C und einer relativen Feuchte von 80 % nach der Wärmeschrumpfbehandlung gemessen, aufweist.

**13.** Verfahren nach Anspruch 12, wobei die wärmeschrumpfbare Mehrschichtfolie des Weiteren mit einer zusätzlichen Schicht entweder als zusätzliche Schicht auf der Oberfläche der Schicht (a) oder der Schicht (b), auf der keine Schicht schichtförmig aufgebracht worden ist, oder auf der Oberfläche der Trägerfolie, auf der keine Schicht schichtförmig aufgebracht worden ist, laminiert ist.

## Revendications

**1.** Film multicouche thermorétrécissable comprenant un film de support (film de base) thermorétrécissable présentant un pourcentage de thermorétrécissement dans au moins une direction de 5 à 90 %, mesuré par immersion du film de support dans de l'eau chaude à 90 °C pendant 30 secondes, et, pourvue sur au moins une surface du film de support, au moins une structure en couches comprenant une couche (a) formée d'un polymère de poly(acide carboxylique) (A) et une couche (b) formée d'un composé métallique polyvalent (B), les couches (a) et (b) étant en contact l'une avec l'autre, dans lequel le film multicouche présente un pourcentage de thermorétrécissement dans au moins une direction de 5 à 90 %, mesuré par immersion du film multicouche dans de l'eau chaude à 90 °C pendant 30 secondes, et dans lequel le film multicouche présente une perméabilité à l'oxygène inférieure ou égale à 100 cm$^3$/(m$^2$·jour·MPa), mesurée à 30 °C et une humidité relative de 80 % après traitement de thermorétrécissement.

**2.** Film multicouche thermorétrécissable selon la revendication 1, dans lequel la couche (b) formée du composé métallique polyvalent (B) est une couche de résine contenant un composé métallique polyvalent formée du composé métallique polyvalent (B) et d'une résine.

**3.** Film multicouche thermorétrécissable selon la revendication 1 ou 2, dans lequel le rapport entre l'épaisseur totale d'une couche étanche aux gaz formée des couches (a) et (b) qui sont en contact l'une avec l'autre et celle du film de support est compris entre 0,001 et 0,5.

**4.** Film multicouche thermorétrécissable selon l'une quelconque des revendications 1 à 3, dans lequel le composé métallique polyvalent (B) est un composé métallique divalent.

**5.** Film multicouche thermorétrécissable selon l'une quelconque des revendications 1 à 4, dans lequel le polymère de poly(acide carboxylique) (A) est un homopolymère ou copolymère formé d'au moins un monomère polymérisable sélectionné parmi l'acide acrylique, l'acide maléique et l'acide méthacrylique et/ou un mélange d'homopolymères ou de copolymères de ce type.

**6.** Film multicouche thermorétrécissable selon l'une quelconque des revendications 1 à 5, qui contient une couche supplémentaire.

**7.** Film multicouche thermorétrécissable selon la revendication 6, dans lequel la couche supplémentaire est une couche contenant un adhésif.

**8.** Film multicouche thermorétrécissable selon l'une quelconque des revendications 1 à 7, qui, suite à un traitement de thermorétrécissement, présente une perméabilité à l'oxygène inférieure ou égale à celle qu'il avait avant le traitement de thermorétrécissement.

9. Matériau d'emballage comprenant un film multicouche thermorétrécissable selon l'une quelconque des revendications 1 à 8.

10. Matériau d'emballage selon la revendication 9, qui a la forme d'un sac, d'une feuille, d'une étiquette, d'un conteneur ou d'un matériau de couverture.

11. Étiquette thermorétrécissable selon la revendication 10, à laquelle un agent poisseux thermosensible a été appliqué.

12. Procédé pour produire un film multicouche thermorétrécissable comprenant les étapes consistant à :

(i) enduire au moins une surface d'un film de support (film de base) thermorétrécissable d'un liquide d'enduction contenant un polymère poly(acide carboxylique) (A) ou un monomère de polymère poly(acide carboxylique) (A) qui est polymérisé après enduction ; et un solvant et, par la suite, retirer le solvant, et
(ii) enduire le film de support d'un liquide d'enduction contenant un composé métallique polyvalent (B) et un solvant et, par la suite, retirer le solvant,
dans lequel les étapes (i) et (ii) peuvent être réalisées indépendamment de l'ordre de manière qu'au moins une structure en couches comprenant une couche (a) formée d'un polymère de poly(acide carboxylique) (A) et une couche (b) formée d'un composé métallique polyvalent (B), dans laquelle les couches (a) et (b) sont en contact l'une avec l'autre, soit formée sur le film de support,
dans lequel le film de support présente un pourcentage de thermorétrécissement dans au moins une direction de 5 à 90 %, mesuré par immersion du film de support dans de l'eau chaude à 90 °C pendant 30 secondes, et
dans lequel le film multicouche présente un pourcentage de thermorétrécissement dans au moins une direction de 5 à 90 %, mesuré par immersion du film multicouche dans de l'eau chaude à 90 °C pendant 30 secondes, et dans lequel le film multicouche présente une perméabilité à l'oxygène inférieure ou égale à 100 cm$^3$/ (m$^2$·jour·MPa), mesurée à 30 °C et une humidité relative de 80 % après traitement de thermorétrécissement.

13. Procédé selon la revendication 12 dans lequel le film multicouche thermorétrécissable est en outre stratifié avec une couche supplémentaire, soit sous la forme d'une couche supplémentaire sur la surface de la couche (a) ou de la couche (b) sur laquelle aucune couche n'a été enduite soit sur la surface du film de support sur laquelle aucune couche n'a été enduite.

**EP 1 632 346 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001341201 A
- JP 2002121246 A